# FASCICULE DE BREVET EUROPEEN

(11) **EP 1 820 068 B1**
(45) Date de publication et mention de la délivrance du brevet: **01.08.2012**
(21) Numéro de dépôt: 05824457.5
(22) Date de dépôt: 06.12.2005
(51) Int. Cl.: B24B 13/00, G02C 7/02, G03H 1/02, G03H 1/08

(54) **PROCEDE D'INSCRIPTION DE DONNEES SOUS FORME HOLOGRAPHIQUE SUR UNE LENTILLE ET LENTILLE CORRESPONDANTE**
VERFAHREN ZUR DATENAUFZEICHNUNG IN EINER HOLOGRAFISCHEN FORM AUF EINER LINSE UND ENTSPRECHENDE LINSE
METHOD FOR RECORDING DATA IN A HOLOGRAPHIC FORM ON A LENS AND A CORRESPONDING LENS

(30) Priorité: 10.12.2004 FR 0413185
(43) Date de publication de la demande: 22.08.2007
(73) Titulaire: ESSILOR INTERNATIONAL (Compagnie Générale d'Optique), 94220 Charenton le Pont (FR)
(72) Inventeur: BEGON, Cédric, F-94220 CHARENTON LE PONT (FR)
(74) Mandataire: Cabinet Plasseraud
(86) Numéro de dépôt international: PCT/FR2005/003053
(87) Numéro de publication internationale: WO 2006/064107

(56) Documents cités:
- WO-A-01/23921
- DD-A5- 297 519
- DE-A1- 19 644 620
- DE-A1- 19 758 395
- US-A- 5 483 363
- US-A- 5 892 600
- GALE M T ET AL: "MICRO OPTICS - Chap. 6 : Replication" MICRO-OPTICS: ELEMENTS, SYSTEMS AND APPLICATIONS, 1997, pages 158-159,165, XP002322732

## Description

La présente invention concerne un procédé d'inscription de données sur une lentille optique, ainsi qu'une lentille optique comprenant des données inscrites sur celle-ci.

La réalisation d'hologrammes sur une lentille optique est connue pour un usage décoratif. Les documents US5892600 et DE19644620A1 décrivent par exemple une lentille optique comportant à sa surface un hologramme restituable en champ proche apportant une fonction décorative, fonction décorative qui se double d'un rôle d'identification dans le cas de DE19644620A1. Le document WO01/23921A1 décrit une lentille optique comportant à sa surface un ensemble d'hologrammes restituables en champ lointain apportant une fonction décorative.

Dans le cadre de la présente invention, l'inscription d'hologramme sur la lentille a pour vocation l'enregistrement de données pertinentes pour sa production ou son usage, sans modification de son usage en tant que lentille optique.

Il est difficile d'inscrire des données sur une lentille optique sans gêner l'utilisation de celle-ci. En effet, la lentille est transparente et des données inscrites sur l'une de ses faces provoquent des ombres lorsque qu'un faisceau lumineux traverse la lentille. Afin de réduire une telle gêne, il est possible d'inscrire les données en petits caractères, voire en caractères microscopiques. Il est alors nécessaire d'utiliser un appareil de grossissement, tel qu'une loupe, pour lire les caractères. Un tel appareil n'est pas commode d'utilisation, en particulier parce que les caractères ne sont pas lisibles par plusieurs utilisateurs simultanément.

Or, il est de plus en plus nécessaire d'indiquer sur une lentille diverses informations, telles que, par exemple, un numéro de série ou de fabrication, une caractéristique optique de la lentille, une indication du matériau constitutif de la lentille, une indication de provenance ou de circuit de distribution, ou encore un prix, ou un code se rapportant à ces diverses caractéristiques.

En outre, dans le domaine ophtalmique, il est maintenant fréquent de fabriquer des verres de correction personnalisés, notamment en fonction de l'amétropie du porteur des verres. Une correction de la vue du porteur est ainsi obtenue, qui est plus finement adaptée à l'amétropie diagnostiquée. Dans ce cas, la quantité de données qu'il est utile d'inscrire sur le verre correcteur peut être importante. En outre, son mode d'inscription sur le verre doit être compatible avec l'exigence requise de confidentialité médicale.

Un but de l'invention est donc de proposer un mode d'inscription de données sur une lentille, qui ne présente pas les inconvénients cités ci-dessus.

Pour cela, l'invention propose un procédé d'inscription de données sur une lentille optique conformément à la première revendication, et qui comprend entre outre les étapes suivantes :
a- enregistrer une image source contenant les données sous forme codée;
b- générer par calcul un hologramme de ladite image source ; et
c- inscrire l'hologramme sur la lentille.

L'hologramme ainsi inscrit sur la lentille définit une zone diffractive qui est généralement impropre à la vision car elle affecte la transmission des fréquences spatiales du champ électromagnétique, et donc la capacité de la portion de lentille concernée à agir comme dispositif d'imagerie. Pour cette raison, dans le cadre de l'invention l'aire de l'hologramme inscrit est comprise entre 0,5 et 15 mm², préférentiellement inférieure à 5 mm². Cet interval de taille est limité de façon à minimiser la gêne pour l'utilisateur de la lentille, et notamment pour permettre un positionnement préférentiel de l'hologramme hors de la zone centrale de la lentille.

Par lentille optique, on entend notamment les lentilles ophtalmiques et les lentilles pour instruments d'optiques. Par lentille ophtalmique, on entend les lentilles s'adaptant à une monture de type lunette ou visière, pour protéger l'oeil et/ou corriger la vue, ces lentilles étant choisies parmi les lentilles afocales, unifocales, bifocales, trifocales et progressives. De telles lentilles peuvent être transparentes ou colorées. Par lentilles colorées on entend une lentille présentant un taux de transmission compris entre 3% et 90% inclus. Au-delà de 90% on considère la lentille comme une lentille transparente. Dans le cadre de l'invention on entend de façon préférentielle les lentilles ophtalmiques s'adaptant à une monture de lunettes telles que décrite précédemment.

Etant donné que, selon l'invention, les données sont inscrites sur la lentille sous forme d'un hologramme, elles ne sont pas directement lisibles. L'exigence de confidentialité est ainsi satisfaite.

En outre, l'hologramme peut être lu en dirigeant au moins un faisceau lumineux cohérent sur la lentille ou au travers de la lentille, à l'endroit de l'hologramme. Une telle opération de lecture d'un hologramme est bien connue. Elle est simple, et les données apparaissent dans une image de lecture qui reproduit l'image source de l'hologramme. L'image de lecture est projetée sur un écran à distance de la lentille, de sorte qu'elle est suffisamment grande pour que plusieurs personnes puissent lire simultanément les données.

Avantageusement, l'hologramme peut être adapté pour former l'image de lecture des données lors d'un éclairement dudit hologramme par un laser. Pour lire les données, il est alors suffisant de disposer d'un petit laser, du type stylo à diode laser par exemple, d'un modèle courant, peu onéreux et peu encombrant.

Avantageusement, un dispositif optique peut être adjoint à la diode laser pour projeter l'image de lecture sur un capteur d'image tel que par exemple une matrice CCD ou CMOS. Le capteur étant relié à un calculateur, une telle configuration peut permettre une lecture rapide de l'image de lecture et une extraction automatisée des données qu'elle contient.

Le procédé d'inscription peut être mis en oeuvre pour tous types de données, notamment des données d'identification de la lentille, des informations techniques, logistiques, commerciales, médicales ou de marketing.

De façon plus précise et non limitative, les données contenues dans l'hologramme pourront concerner les coordonnées du porteur, les coordonnées du prescripteur, les coordonnées du vendeur, l'ensemble des données techniques utiles au calcul des surfaces optiques de la lentille, l'ensemble des données relatives à la fabrication de la lentille, telles que par exemple la nature des matériaux utilisés pour fabriquer la lentille et les dates de fabrication. Les données contenues dans l'hologramme pourront également concerner l'ensemble des caractéristiques de la monture pouvant recevoir la lentille, et l'ensemble des données utiles au taillage ou détourage de la lentille et à sa mise en place dans une monture. Pourront également être contenues dans l'hologramme les données relatives aux conditions de port de la lentille, telles que par exemple la distance oeil - lentille, ainsi que les données relatives aux conditions d'usage de la lentille, telles que par exemple un usage préférentiel. De plus, pourront aussi être contenues dans l'hologramme des données commerciales, telles que par exemple les dates de prescription et d'achat de la lentille, et la date de remplacement souhaitable de la lentille.

La densité des données qui peuvent être contenues dans un hologramme peut être particulièrement élevée, sans rendre plus difficile la lecture des données par éclairement de l'hologramme. En particulier, un hologramme de 1 millimètre-carré (mm²) peut contenir plusieurs kilo-octets inscrits de façon redondante pour obtenir une sûreté suffisante de restitution des données. L'hologramme peut donc être inscrit sur la lentille en occupant une portion de surface très réduite de celle-ci. Dans le cadre de l'invention l'hologramme occupe une portion de surface de la lentille comprise entre 15 mm² et 0,5 mm² inclus, préférentiellement inférieure à 5 mm².

Préférentiellement, l'hologramme est inscrit sur la lentille à proximité d'un bord périphérique de celle-ci. De cette façon, la gêne provoquée par l'hologramme pendant l'utilisation de la lentille est réduite. Lorsque la lentille est une ébauche, telle que par exemple, une ébauche de verre ophtalmique, l'hologramme peut être inscrit dans une partie de la lentille destinée à être détourée. L'ébauche est alors marquée jusqu'au moment du détourage, par exemple dans un but de traçabilité ou de logistique, mais aucune gêne n'en résulte lors de l'utilisation du verre.

Dans le cadre de l'invention, les données sont contenues dans l'image source sous forme codée. En particulier, l'image source peut contenir un code-barres correspondant aux données. Un degré de confidentialité supplémentaire peut être ainsi introduit pour l'accès aux données inscrites sur la lentille, notamment en utilisant un algorithme de codage ou de représentation des données dans l'image source qui est conservé secret.

L'invention concerne aussi une lentille optique, notamment ophtalmique, telle que définie dans la revendication 13.

Une telle lentille peut être réalisée en utilisant un procédé tel que décrit précédemment, pour inscrire sur celle-ci des données de nature diverse.

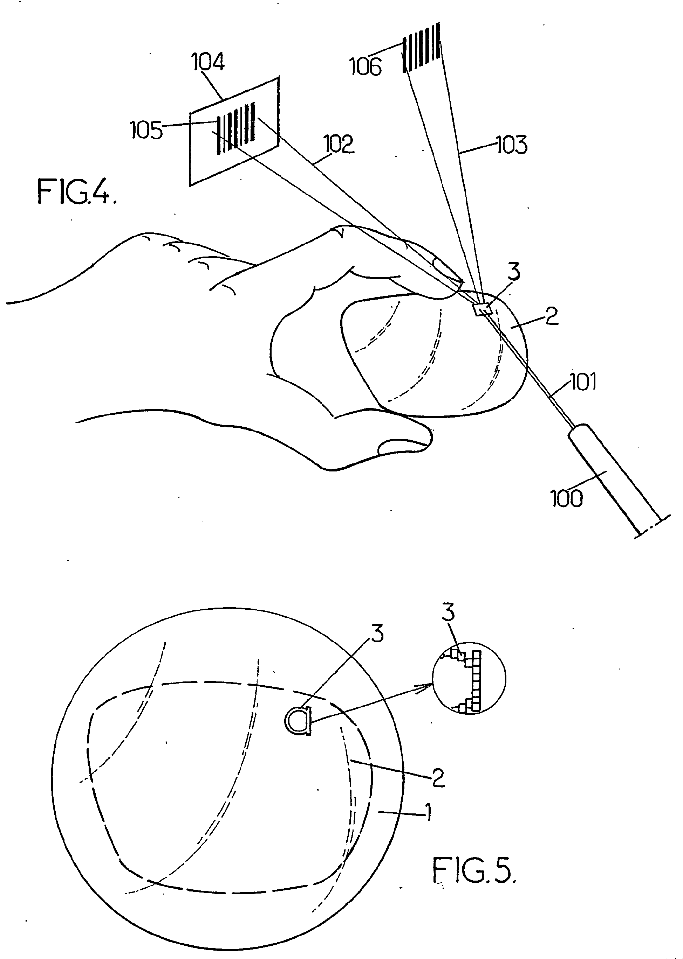

D'autres particularités et avantages apparaîtront dans la description ci-après d'exemples permettant de comprendre le contexte de l'invention. La présente invention étant illustrée de manière non limitative à travers la figure 5. En référence aux dessins annexés:
- la figure 1 est un diagramme des étapes d'un procédé d'inscription de données selon l'invention ;
- les figures 2a et 2b représentent chacune une ébauche de verre ophtalmique, sur laquelle des données sont inscrites ;
- les figures 3a-3c sont des grossissements d'un hologramme inscrit sur une lentille selon l'invention ;
- la figure 4 illustre l'étape de lecture de données inscrites selon l'invention ; et
- la figure 5 représente une lentille portant des données inscrites selon l'invention.

Pour raison de clarté des figures, les dimensions des éléments représentés ne sont pas en proportion avec des dimensions réelles. En outre, des références identiques dans des figures distinctes désignent des éléments identiques, ou qui ont des fonctions identiques.

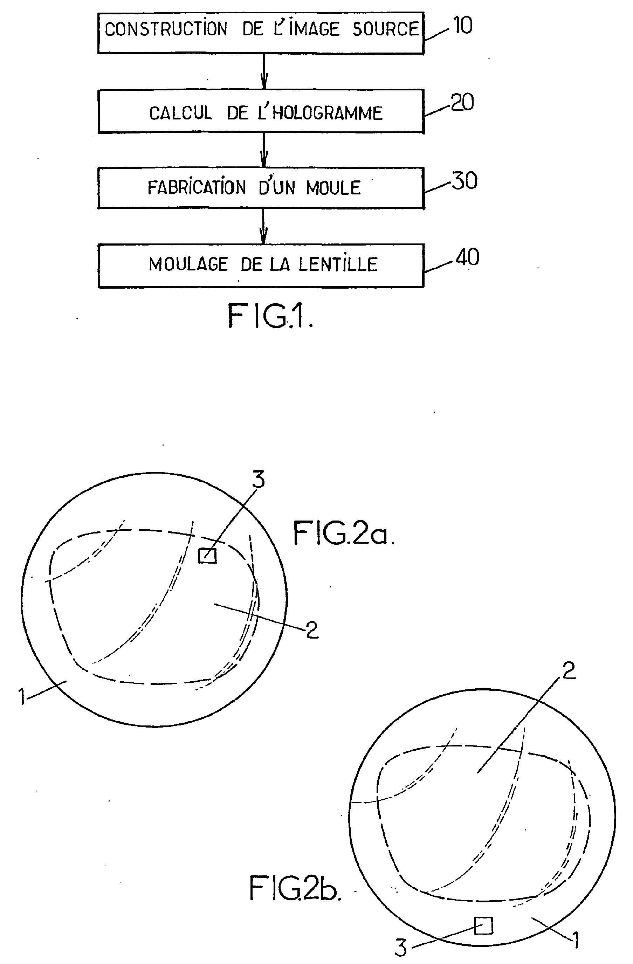

Conformément à la figure 1, le procédé d'inscription de données sur une lentille optique débute par la construction d'une image contenant les données (étape 10). Des méthodes très diverses de génération d'image peuvent être utilisées, telles que la photographie, la saisie par scanner d'une feuille imprimée, etc. De préférence, l'image est générée par calcul, par exemple en utilisant un ordinateur. Elle est enregistrée sous forme d'un tableau de valeurs lumineuses attribuées à des pixels de l'image. Aucun support matériel de l'image source, de type feuille de papier ou tableau d'affichage, n'est alors nécessaire. Les données contenues dans l'image peuvent être des caractères alphanumériques juxtaposés, barres correspondant aux données destinées à être inscrites ou tout autre moyen de représentation visuelle de données. Les données contenues dans l'image source selon l'invention peuvent être un code-barres correspondant aux données destinées à être inscrites

Un hologramme de l'image source est alors calculé informatiquement (étape 20). Différents programmes sont disponibles aujourd'hui, pour générer un hologramme à partir d'une image source. La fonction de ces programmes consiste principalement à effectuer une transformation de Fourier de l'image source. L'hologramme obtenu, sous forme d'une matrice de valeurs, est usuellement appelé « Computer Generated Hologram ». La nature de l'hologramme obtenu, à savoir un hologramme d'amplitude ou de phase, ainsi que la densité de pixels dans l'hologramme et le nombre de niveaux possibles de la valeur d'amplitude ou de phase attribuée à chaque pixel de l'hologramme dépendent du programme utilisé et/ou de son paramétrage. En particulier, des hologrammes binaires peuvent être calculés de cette façon, pour lesquels la valeur d'amplitude attribuée à chaque pixel ne peut prendre que deux valeurs. Ces deux valeurs d'amplitude sont 0 et 1 pour un hologramme binaire d'amplitude, ou -1 et +1 pour un hologramme binaire de phase.

Lors du calcul de l'hologramme par ordinateur, il est possible de prendre en compte la courbure de la surface sur laquelle l'hologramme sera inscrit pour minimiser toute distorsion de l'image de lecture lors de sa restitution sous éclairage laser. De la même façon, dans le cas où l'hologramme est inscrit sur une lentille, la puissance optique de la lentille à l'endroit de l'inscription de l'hologramme peut être prise en compte dans le calcul, afin de satisfaire certaines conditions de restitution souhaitées pour l'image de lecture.

L'hologramme est ensuite inscrit sur la lentille. Cette inscription peut être effectuée de diverses façons, notamment par gravure laser. Dans ce cas, un faisceau laser balaye des zones juxtaposées d'une portion de la surface de la lentille avec une puissance d'irradiation qui correspond aux valeurs d'amplitude des pixels de l'hologramme. En fonction de la puissance d'irradiation pour chaque pixel, le laser pulvérise ou non une partie du matériau à la surface de la lentille. Il inscrit ainsi l'hologramme sur la lentille sous forme de reliefs et de creux. Alternativement, la portion de lentille peut être recouverte d'une couche métallique, qui est retirée lors d'impacts du laser réalisés aux endroits des pixels de l'hologramme inscrit, conformément à la valeur d'amplitude associée à chaque pixel.

De façon préférée, un motif correspondant à l'hologramme est d'abord inscrit sur un moule (étape 30). Pour un hologramme binaire, les valeurs d'amplitude qui peuvent être associées à chaque pixel de l'hologramme correspondent à deux hauteurs différentes de la surface du moule, séparées de 1 µm par exemple.

Selon un premier mode de mise en oeuvre de l'invention, l'inscription de l'hologramme sur la lentille comprend les sous-étapes suivantes :
- réaliser un moule transparent à des rayons UV ayant un motif formé de reliefs et de creux correspondant à l'hologramme ;
- recouvrir la lentille d'une couche de fluide polymérisable par des rayons UV;
- appliquer le moule sur la couche (étape 40) de sorte que le fluide pénètre les creux entre les reliefs, et diriger simultanément un faisceau de lumière UV sur la couche au travers du moule, de façon à polymériser le fluide moulé ; et
- retirer le moule de la lentille.

Un tel procédé d'inscription est bien connu et désigné couramment par «UV embossing» ou «UV moulding». Un matériau adapté pour le moule est, par exemple, un élastomère de type siloxane, tel que commercialisé par la société Dow Corning sous la désignation commerciale Sylgard^{®} 184.

En outre, un moule en élastomère est particulièrement adapté pour inscrire un motif sur une surface pseudo-sphérique.

Selon un second mode de mise en oeuvre de l'invention, l'inscription de l'hologramme sur la lentille comprend les sous-étapes suivantes :
- réaliser un moule ayant un motif formé de reliefs et de creux correspondant à l'hologramme ;
- recouvrir la lentille d'une couche de fluide thermiquement polymérisable;
- appliquer le moule sur la couche (étape 40) de sorte que le fluide pénètre les creux entre les reliefs, et simultanément soumettre à une source thermique la couche au travers du moule, de façon à polymériser le fluide moulé ; et
- retirer le moule de la lentille.

Dans le cadre de l'invention, on entend par surface pseudo-sphérique une surface concave ou convexe continue, c'est-à-dire dépourvue de trous ou de marches. En général, au moins l'une des deux faces d'une lentille optique est pseudo-sphérique, de sorte que la variation d'épaisseur de la lentille qui en résulte lui confère un pouvoir optique. Des verres ophtalmiques afocaux, unifocaux, bifocaux, trifocaux et progressifs ont tous au moins une face pseudo-sphérique. Une surface sphérique correspond à un cas particulier de surface pseudo-sphérique, pour lequel des rayons de courbure de la surface selon deux directions perpendiculaires sont égaux. Dans la suite, l'expression «surface pseudo-sphérique» est entendue comme incluant le cas particulier des surfaces sphériques.

Pour inscrire l'hologramme sur une surface de lentille pseudo-sphérique, la couche de fluide polymérisable est disposée sur cette surface de façon à recouvrir entièrement l'emplacement d'inscription de l'hologramme. Le moule doit être suffisamment souple pour se déformer conformément à la surface pseudo-sphérique de la lentille lorsqu'il est appliqué sur la couche de fluide polymérisable.

Un inconvénient de ce mode de mise en oeuvre provient du fait que l'hologramme inscrit sur la lentille est directement exposé à des salissures. Il peut aussi être endommagé par des rayures accidentelles de la surface de la lentille. La lecture des données peut alors être difficile, étant donné que de telles salissures ou rayures de l'hologramme engendrent un brouillage de l'image de lecture.

Selon un second mode de mise en oeuvre de l'invention, l'inscription de l'hologramme sur la lentille comprend les sous-étapes suivantes :
- réaliser un moule ayant un motif formé de reliefs et de creux correspondant à l'hologramme (étape 30) ; et
- couler un premier matériau réfringent de la lentille dans le moule (étape 40).

Dans ce cas, le moule qui comporte l'hologramme en motif est directement utilisé pour former la lentille. Il doit donc être en matériau rigide. De façon usuelle, le premier matériau réfringent de la lentille est un matériau organique, par exemple à base de polycarbonate ou de polyéthylène.

Une partie de la lentille portant l'hologramme est ensuite enrobée d'un second matériau réfringent, lesdits premier et second matériaux réfringents ayant des indices de réfraction respectifs différents. Le second matériau réfringent peut aussi être un matériau organique. L'hologramme est alors inscrit au sein de la lentille, au niveau de l'interface entre les deux matériaux réfringents. Il ne peut alors plus être dégradé par une rayure accidentelle de la lentille. En outre, pour une telle configuration de la lentille, la lisibilité des données dans l'image de lecture est peu affectée par l'état de salissure du verre.

Les figures 2a et 2b représentent chacune une ébauche de verre ophtalmique 1. De façon connue, le verre ophtalmique 2 est obtenu par détourage de l'ébauche 1. Le contour de détourage est indiqué en pointillés sur les figures. L'hologramme 3 peut être inscrit sur l'ébauche soit à l'intérieur du contour de détourage (figure 2a), soit à l'extérieur du contour (figure 2b). L'inscription à l'extérieur du contour de détourage est appropriée lorsque les données inscrites n'ont plus d'intérêt après que le verre a été assemblé avec une monture. Ce peut être le cas, par exemple, pour des données logistiques ou commerciales. A l'inverse, il peut être avantageux d'inscrire des données médicales à l'intérieur du contour de détourage, afin que ces données restent de façon permanente sur le verre. Par exemple, un contrôle de conformité du verre par rapport à une prescription médicale peut ainsi être effectué à partir d'une paire de lunettes assemblées.

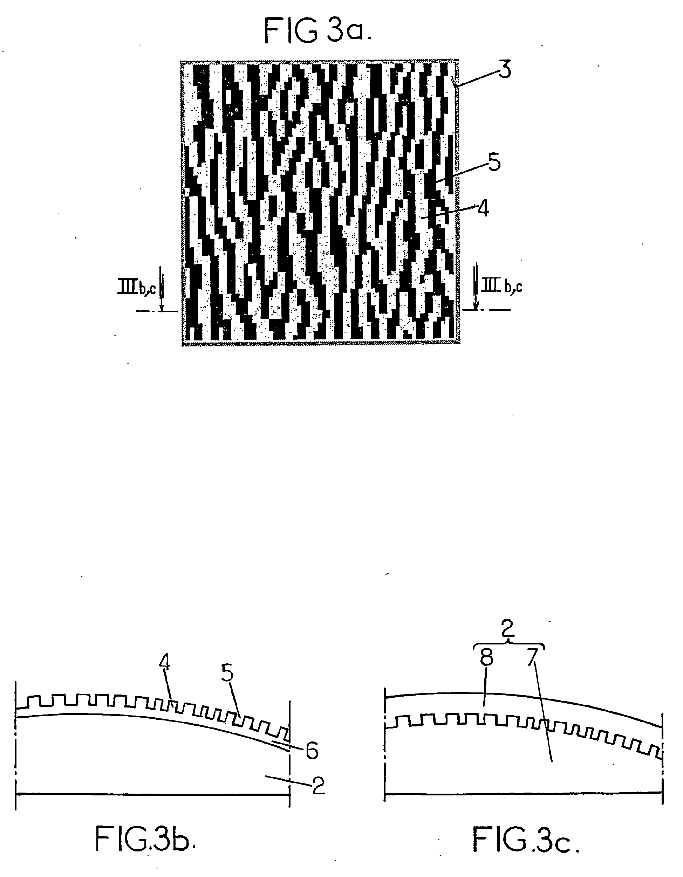

La figure 3a représente une partie d'un hologramme binaire inscrit sur le verre ophtalmique 2. L'hologramme est constitué d'une matrice de 400 x 400 pixels sensiblement carrés, chaque pixel ayant 1 µm de côté, par exemple. L'hologramme a alors pour dimensions 0,4 mm x 0,4 mm, ce qui est suffisamment petit pour ne pas engendrer de gêne sensible pour le porteur du verre. Visuellement, l'hologramme 3 apparaît comme un petit carré diffusant, blanchâtre ou d'aspect légèrement réfléchissant. Etant donné que, dans ce cas, chaque pixel correspond à un niveau de la surface du verre déterminé entre deux niveaux possibles, l'hologramme apparaît comme une juxtaposition de reliefs et de creux, respectivement référencés 4 et 5. Conformément aux principes généraux des hologrammes, la disposition essentiellement verticale des reliefs 4 et des creux 5 sur la figure 3a indique que l'image source présente une structure plus accentuée dans le sens horizontal que dans le sens vertical. Dans le cas présent, les données sont contenues dans l'image source sous forme d'un code-barres orienté horizontalement.

Les figures 3b et 3c sont des sections du verre 2 à l'endroit de l'hologramme 3, pour chacun des premier et second modes d'inscription de l'hologramme 3 décrits plus haut. La figure 3b correspond au mode d'inscription «UV embossing», et la figure 3c correspond à une inscription de l'hologramme à l'interface entre deux matériaux réfringents constituant le verre. Dans la figure 3b, la référence 6 désigne la couche de fluide polymérisée et, dans la figure 3c, les références 7 et 8 désignent respectivement et les premier et second matériaux réfringents qui constituent le verre 2.

La figure 4 illustre l'étape de lecture des données. Le verre ophtalmique 2 est éclairé par un stylo laser 100 de faible puissance comportant éventuellement une lentille de collimation, le faisceau émis étant par exemple de couleur rouge, à l'endroit de l'hologramme 3. De façon connue, la distance entre le laser 100 et l'hologramme 3 n'a pas d'importance. Le faisceau lumineux 101 issu du laser 100 est diffracté par l'hologramme 3, de sorte qu'il est divisé en deux faisceaux secondaires 102 et 103 après avoir traversé le verre 2. Chacun des deux faisceaux 102 et 103 reconstruit l'image source à une distance du verre 2 qui peut être comprise entre 20 cm et 50 cm, par exemple. L'image source reproduite est alors révélée en disposant un objet 104 servant d'écran sur le trajet de l'un des deux faisceaux 102 ou 103. Du fait que la lumière utilisée est issue d'un laser, l'objet qui sert d'écran pour révéler l'image source reconstruite peut être quelconque. L'image source reconstruite possède une forme carrée ou rectangulaire de plusieurs centimètres de côté. Elle est donc facilement lisible par plusieurs personnes simultanément. Elle peut aussi avantageusement être projetée sur un capteur d'image, par exemple de type CCD ou CMOS, pour permettre une reconnaissance rapide de l'image et également une analyse de l'image à l'aide d'un calculateur pour extraire les données qu'elle contient. Sur la figure 4, les images reconstruites correspondant à chacun des deux faisceaux 102 et 103, sont référencées 105 et 106 respectivement. Elles sont appelées images de lecture et représentent chacune le code-barres contenu initialement dans l'image source. Les images 105 et 106 peuvent correspondre à deux ordres de diffraction opposés, par exemple +1 et -1, de sorte que les deux images 105 et 106 sont inversées l'une par rapport à l'autre. De façon connue, lorsque l'hologramme 3 est du type hologramme de phase, il est possible d'adapter chaque pixel de sorte que l'une des deux images de lecture produites lors de la diffraction du faisceau 101 par l'hologramme 3 soit plus lumineuse que l'autre.

Selon l'invention, l'hologramme est inscrit à plusieurs endroits de la lentille. Etant donné que la section du faisceau lumineux 101 produit par le laser 100 est de l'ordre de 1 mm², plusieurs inscriptions de l'hologramme peuvent être éclairées simultanément. Chaque inscription d'hologramme contribue alors à l'image (aux images) de lecture, de sorte que celle-ci (celles-ci) est (sont) plus lumineuse(s) d'une façon sensiblement proportionnelle au nombre d'inscriptions éclairées simultanément. Avantageusement, certaines des multiples inscriptions de l'hologramme 3 sur le verre sont contiguës entre elles. Le contraste de l'image (des images) de lecture est alors amélioré. Selon l'invention, chaque inscription de l'hologramme 3 constitue un pixel d'une image directement lisible sur la lentille. La figure 5 et son grossissement de détail illustrent l'invention . Dans l'exemple considéré, l'ensemble des inscriptions de l'hologramme 3 sur la surface de l'ébauche ophtalmique 1 forme une lettre "a" de dimensions millimétriques.

Un procédé d'inscription de données selon l'invention présente donc de nombreux avantages, parmi lesquels on peut citer ou rappeler les suivants :
- le procédé est compatible avec l'exigence de transparence d'une lentille optique ;
- le procédé est compatible avec les exigences d'esthétisme propres à une utilisation ophtalmique ;
- le motif d'hologramme inscrit sur la lentille peut être calculé aisément avec des moyens informatiques courants ;
- plusieurs procédés peuvent être utilisés alternativement pour inscrire l'hologramme sur la lentille, qui sont faciles à mettre en oeuvre ;
- les données inscrites sur la lentille sont lisibles de façon simple, rapide et peu onéreuse ;
- aucun contact avec les faces de la lentille n'est nécessaire pour lire les données inscrites, de sorte que le risque de rayer la lentille lors de la lecture des données est réduit ;
- le procédé est compatible avec une exigence de confidentialité des données inscrites, puisque ces données ne sont pas directement lisibles sur la lentille ;
- la quantité de données pouvant être inscrites sur une même lentille peut être importante, sans qu'une gêne notable en résulte lors de l'utilisation de la lentille ; et
- les données inscrites sur la lentille peuvent remplacer des données inscrites sur un emballage de celle-ci. Une interversion des emballages respectifs de plusieurs lentilles est alors sans conséquence, et elle peut être facilement détectée et corrigée si nécessaire.

Enfin, l'hologramme peut être inscrit sur la lentille de sorte que l'image de lecture corresponde à l'image source positivement ou négativement, selon si un pixel lumineux de l'image source est restitué dans l'image de lecture sous forme d'un pixel lumineux ou sombre.

## Revendications

1. Procédé d'inscription de données sur une lentille optique (1, 2) comprenant les étapes suivantes :
a- enregistrer une image source contenant les données sous forme codée ;
b- générer par calcul un hologramme (3) de ladite image source ; et
c- inscrire l'hologramme sur la lentille, ledit hologramme occupant une portion de surface de la lentille comprise entre 15 mm² et 0,5 mm² inclus,
en outre, suivant le procédé, l'hologramme (3) est inscrit à plusieurs endroits de la lentille (1, 2), et le procédé étant **caractérisé en ce que** chaque inscription de l'hologramme (3) constitue un pixel d'une image directement lisible sur la lentille (1, 2).

2. Procédé selon la revendication 1, suivant lequel la lentille (1,2) est une lentille ophtalmique

3. Procédé selon la revendication 1 ou 2, suivant lequel les données correspondent à une identification de la lentille, à des informations techniques, logistiques, commerciales, médicales ou de marketing.

4. Procédé selon l'une quelconque des revendications précédentes, suivant lequel l'hologramme (3) est inscrit à proximité d'un bord périphérique de la lentille (1, 2).

5. Procédé selon la revendication 4, suivant lequel l'hologramme (3) est inscrit dans une partie de la lentille (1, 2) située à l'extérieur d'un contour de détourage, ledit procédé comprenant l'étape suivante effectuée après l'étape c :
d- détourer la lentille selon ledit contour et assembler ladite lentille dans une monture de lunettes.

6. Procédé selon l'une quelconque des revendications précédentes, suivant lequel l'hologramme (3) est un hologramme binaire.

7. Procédé selon l'une quelconque des revendications précédentes, suivant lequel l'image source contient un code-barres correspondant aux données.

8. Procédé selon l'une quelconque des revendications 1 à 7, suivant lequel l'étape c comprend les sous-étapes suivantes :
- réaliser un moule transparent à des rayons UV ayant un motif formé de reliefs et de creux correspondant à l'hologramme (3) ;
- recouvrir la lentille (1, 2) d'une couche (6) de fluide polymérisable par des rayons UV ;
- appliquer le moule sur la couche (6) de sorte que le fluide pénètre les creux entre les reliefs, et diriger simultanément un faisceau de lumière UV sur la couche au travers du moule, de façon à polymériser le fluide moulé ; et
- retirer le moule de la lentille.

9. Procédé selon l'une quelconque des revendications 1 à 7, suivant lequel l'étape c comporte les sous-étapes suivantes :
- réaliser un moule ayant un motif formé de reliefs et de creux correspondant à l'hologramme ;
- recouvrir la lentille d'une couche de fluide thermiquement polymérisable;
- appliquer le moule sur la couche (étape 40) de sorte que le fluide pénètre les creux entre les reliefs, et simultanément soumettre la couche à une source thermique au travers du moule, de façon à polymériser le fluide moulé ; et
- retirer le moule de la lentille.

10. Procédé selon la revendication 8 ou 9, suivant lequel la couche de fluide polymérisable (6) est disposée sur une surface pseudo-sphérique de la lentille (1, 2), et suivant lequel le moule est suffisamment souple pour se déformer conformément à la surface de la lentille lors de l'application dudit moule sur la couche de fluide polymérisable.

11. Procédé selon l'une quelconque des revendications 1 à 7, suivant lequel l'étape c comprend les sous-étapes suivantes :
- réaliser un moule ayant un motif formé de reliefs et de creux correspondant à l'hologramme (3) ; et
- couler un premier matériau réfringent de la lentille (7) dans le moule.

12. Procédé selon la revendication 11, suivant lequel une partie de la lentille (1, 2) portant l'hologramme (3) est ensuite enrobée d'un second matériau réfringent (8), lesdits premier (7) et second (8) matériaux réfringents ayant des indices de réfraction respectifs différents.

13. Lentille optique (1, 2) comprenant des données inscrites sous forme d'un hologramme (3), ledit hologramme occupant une portion de surface de la lentille comprise entre 15 mm² et 0,5 mm² inclus,
dans laquelle l'hologramme (3) est adapté pour former une image (105, 106) contenant les données sous forme codée lors d'un éclairement dudit hologramme, et
dans laquelle l'hologramme (3) est inscrit à plusieurs endroits de la lentille (1, 2), la lentille étant **caractérisée en ce que** chaque inscription de l'hologramme (3) constitue un pixel d'une image directement lisible sur la lentille (1, 2).

14. Lentille selon la revendication 13, adaptée pour une utilisation de lentille ophtalmique.

15. Lentille selon la revendication 13 ou 14, dans laquelle l'hologramme (3) est adapté pour former une image de lecture (105, 106) contenant les données lors d'un éclairement dudit hologramme par un laser (100).

16. Lentille selon l'une quelconque des revendications 13 à 15, dans laquelle les données correspondent à une identification de la lentille, à des informations techniques, logistiques, commerciales, médicales ou de marketing.

17. Lentille selon l'une quelconque des revendications 13 à 16, dans laquelle l'hologramme (3) est inscrit à proximité d'un bord périphérique de la lentille (1, 2).

18. Lentille selon la revendication 17, dans laquelle l'hologramme (3) est inscrit dans une partie de la lentille (1, 2) destinée à être détourée.

19. Lentille selon l'une quelconque des revendications 13 à 18, dans laquelle l'hologramme (3) est un hologramme binaire.

20. Lentille selon l'une quelconque des revendications 13 à 19, dans laquelle l'hologramme (3) est adapté pour former une image d'un code-barres correspondant aux données lors d'un éclairement dudit hologramme.

## Claims

1. A method of writing data onto an optical lens (1, 2), comprising the following steps:
a- recording a source image containing the data in coded form;
b) generating a hologram (3) of said source image by calculation; and
c) writing the hologram onto the lens, said hologram occupying a surface
portion of the lens with an area between 15 mm² and 0.5 mm² inclusive, furthermore, according to the method, the hologram (3) is written at several locations on the lens (1, 2), and the process being **characterized by** each written hologram (3) constituting a pixel of an image directly readable on the lens (1, 2).

2. The method as claimed in claim 1, in which the lens (1, 2) is an ophthalmic lens.

3. The method as claimed in claim 1 or 2, in which the data correspond to an identification of the lens, or to technical, logistic, commercial, medical or marketing information.

4. The method as claimed in any one of the preceding claims, in which the hologram (3) is written close to a peripheral edge of the lens (1, 2).

5. The method as claimed in claim 4, in which the hologram (3) is written in a part of the lens (1, 2) that is located outside a trimming outline, the method comprising the following step carried out after step c:
d- trimming the lens off according to the trimming outline and assembling said lens in an eyeglass frame.

6. The method as claimed in any one of the preceding claims, in which the hologram (3) is a binary hologram.

7. The method as claimed in any one of the preceding claims, in which the source image contains a barcode corresponding to the data.

8. The method as claimed in any one of claims 1 to 7, in which step c-comprises the following substeps:
- producing a mold transparent to UV radiation and patterned with ridges and grooves corresponding to the hologram (3);
- covering the lens (1, 2) with a layer (6) of a UV-curable fluid;
- applying the mold onto the layer (6) so that the fluid penetrates the grooves between the ridges and, at the same time, directing a UV light beam onto the layer through the mold, so as to cure the molded fluid; and
- removing the mold from the lens.

9. The method as claimed in any one of claims 1 to 7, in which step c-comprises the following substeps:
- producing a mold patterned with ridges and grooves corresponding to the hologram;
- covering the lens with a layer of a thermally curable fluid;
- applying the mold onto the layer (step 40) so that the fluid penetrates the grooves between the ridges and, at the same time, exposing the layer to a heat source through the mold, so as to cure the molded fluid; and
- removing the mold from the lens.

10. The method as claimed in claim 8 or 9, in which the layer (6) of curable fluid is arranged on a pseudo-spherical surface of the lens (1, 2), and in which the mold is pliant enough to deform so as to conform to the surface of the lens upon application of said mold onto the layer of curable fluid.

11. The method as claimed in any one of claims 1 to 7, in which step c-comprises the following substeps:
- producing a mold patterned with ridges and grooves corresponding to the hologram (3); and
- pouring a first refringent material (7) of the lens into the mold.

12. The method as claimed in claim 11, in which a part of the lens (1, 2) bearing the hologram (3) is then coated with a second refringent material (8), said first (7) and second (8) refringent materials having different respective refractive indices.

13. An optical lens (1, 2) that includes data written in the form of a hologram (3), said hologram occupying a portion of the surface of the lens with an area between 15 mm² and 0.5 mm² inclusive,
wherein the hologram is adapted for forming an image (105, 106) containing the data in coded form when said hologram (3) is illuminated, and
wherein the hologram (3) is written at several locations on the lens (1, 2), the lens being **characterized by** each written hologram (3) constituting a pixel of an image directly readable on the lens (1, 2).

14. The lens as claimed in claim 13, adapted for use as an ophthalmic lens.

15. The lens as claimed in any one of claims 13 and 14, in which the hologram (3) is adapted to form a read-out image (105, 106) containing the data when said hologram is illuminated by a laser (100).

16. The lens as claimed in any one of claims 13 to 15, in which the data correspond to an identification of the lens, or to technical, logistic, commercial, medical or marketing information.

17. The lens as claimed in any one of claims 13 to 16, in which the hologram (3) is written close to a peripheral edge of the lens (1, 2).

18. The lens as claimed in claim 17, in which the hologram (3) is written in a part of the lens (1, 2) that is intended to be trimmed off.

19. The lens as claimed in any one of claims 13 to 18, in which the hologram (3) is a binary hologram.

20. The lens as claimed in any one of claims 13 to 19, in which the hologram (3) is adapted to form an image of a barcode corresponding to the data when said hologram is illuminated.

## Patentansprüche

1. Verfahren zum Einschreiben von Daten auf eine optische Linse (1, 2), umfassend die folgenden Schritte:
a) Aufzeichnen eines Quellenbildes, welches die Daten in codierter Form enthält,
b) Erzeugen eines Hologramms (3) des Quellenbildes durch Berechnung, und
c) Einschreiben des Hologramms auf die Linse, wobei das Hologramm einen Abschnitt der Oberfläche der Linse zwischen einschließlich 15 mm² und 0,5 mm² besetzt,
wobei gemäß dem Verfahren weiterhin das Hologramm (3) an mehreren Stellen der Linse (1, 2) eingeschrieben wird, und das Verfahren **dadurch gekennzeichnet ist, dass** jede Einschreibung des Hologramms (3) ein Pixel eines Bildes bildet, welches direkt auf der Linse (1, 2) lesbar ist.

2. Verfahren nach Anspruch 1, wobei die Linse (1, 2) eine ophthalmische Linse ist.

3. Verfahren nach Anspruch 1 oder 2, wobei die Daten einer Identifikation der Linse, technischen, logistischen, kommerziellen, medizinischen, oder Marketing-bezogenen Informationen entsprechen.

4. Verfahren nach einem der vorhergehenden Ansprüche, wobei das Hologramm (3) in der Nähe von einem Umfangsrand der Linse (1, 2) eingeschrieben wird.

5. Verfahren nach Anspruch 4, wobei das Hologramm (3) auf einen Teil der Linse (1, 2) eingeschrieben wird, der sich auβerhalb von einer Ausschnitt-Kontur befindet, wobei das Verfahren den folgenden Schritt umfasst, welcher nach dem Schritt c) durchgeführt wird:
d) Ausschneiden der Linse gemäß der Kontur und Einbauen der Linse in ein Brillengestell.

6. Verfahren nach einem der vorhergehenden Ansprüche, wobei das Hologramm (3) ein binäres Hologramm ist.

7. Verfahren nach einem der vorhergehenden Ansprüche, wobei das Quellenbild einen Barcode enthält, welcher den Daten entspricht.

8. Verfahren nach einem der Ansprüche 1 bis 7, wobei der Schritt c) die folgenden Unterschritte umfasst:
- Herstellen einer Form, die für UV-Strahlen durchlässig ist, und die ein aus Erhebungen und Vertiefungen gebildetes Muster aufweist, das dem Hologramm (3) entspricht,
- Bedecken der Linse (1, 2) mit einer Schicht (6) eines Fluids, welches durch UV-Strahlen polymerisierbar ist,
- Anwenden der Form auf die Schicht (6), so dass das Fluid in die Vertiefungen zwischen die Erhebungen eindringt, und gleichzeitiges Richten eines UV-Lichtstrahls durch die Form hindurch auf die Schicht, so dass das geformte Fluid polymerisiert wird, und
- Abnehmen der Form von der Linse.

9. Verfahren nach einem der Ansprüche 1 bis 7, wobei der Schritt c) die folgenden Unterschritte umfasst:
- Herstellen einer Form, welche ein aus Erhebungen und Vertiefungen gebildetes Muster aufweist, das dem Hologramm entspricht,
- Bedecken der Linse mit einer Schicht aus einem thermisch polymerisierbaren Fluid,
- Anwenden der Form auf die Schicht (Schritt 40), so dass das Fluid in die Vertiefungen zwischen die Erhebungen eindringt, und gleichzeitiges Aussetzen der Schicht einer Wärmequelle durch die Form hindurch, so dass das geformte Fluid polymerisiert wird, und
- Abnehmen der Form von der Linse.

10. Verfahren nach Anspruch 8 oder 9, wobei die Schicht des polymerisierbaren Fluids (6) auf eine pseudo-sphärische Oberfläche der Linse (1, 2) aufgetragen wird, und wobei die Form hinreichend flexibel ist, um sich bei der Anwendung der Form auf die Schicht von polymerisierbarem Fluid entsprechend der Oberfläche der Linse zu verformen.

11. Verfahren nach einem der Ansprüche 1 bis 7, wobei der Schritt c) die folgenden Unterschritte umfasst:
- Herstellen einer Form, welche ein aus Vertiefungen und Erhebungen gebildetes Muster aufweist, das dem Hologramm (3) entspricht, und
- Gießen eines ersten lichtbrechenden Materials der Linse (7) in der Form.

12. Verfahren nach Anspruch 11, wobei ein Teil der Linse (1, 2), der das Hologramm (3) trägt, anschließend von einem zweiten lichtbrechenden Material (8) eingehüllt wird, wobei das erste (7) und das zweite (8) lichtbrechende Material jeweils unterschiedliche Brechungsindizes aufweisen.

13. Optische Linse (1, 2), welche eingeschriebene Daten in Form eines Hologramms (3) enthält, wobei das Hologramm einen Oberflächenabschnitt der Linse zwischen einschließlich 15 mm² und 0,5 mm² besetzt, wobei das Hologramm (3) angepasst ist, um bei einer Beleuchtung des Hologramms ein Bild (105, 106) zu bilden, welches die Daten in codierter Form enthält, und
wobei das Hologramm (3) an mehreren Stellen der Linse (1, 2) eingeschrieben ist, wobei die Linse **dadurch gekennzeichnet ist, dass** jede Einschreibung des Hologramms (3) ein Pixel eines Bildes bildet, welches auf direkt der Linse (1, 2) lesbar ist.

14. Linse nach Anspruch 13, angepasst für eine Verwendung als ophthalmische Linse.

15. Linse nach Anspruch 13 oder 14, wobei das Hologramm (3) angepasst ist, um bei einem Beleuchten des Hologramms durch einen Laser (100) ein die Daten enthaltendes Lese-Bild (105, 106) zu bilden.

16. Linse nach einem der Ansprüche 13 bis 15, wobei die Daten einer Identifikation der Linse, technischen, logistischen, kommerziellen, medizinischen oder Marketing-bezogenen Informationen entsprechen.

17. Linse nach einem der Ansprüche 13 bis 16, wobei das Hologramm (3) in der Nähe von einem Umfangsrand der Linse (1, 2) eingeschrieben ist.

18. Linse nach Anspruch 17, wobei das Hologramm (3) in einen Teil der Linse (1, 2) eingeschrieben ist, der dazu bestimmt ist, ausgeschnitten zu werden.

19. Linse nach einem der Ansprüche 13 bis 18, wobei das Hologramm (3) ein binäres Hologramm ist.

20. Linse nach einem der Ansprüche 13 bis 19, wobei das Hologramm (3) angepasst ist, um bei einer Beleuchtung des Hologramms ein Bild eines den Daten entsprechenden Barcodes zu bilden.
